# FASCICULE DE BREVET EUROPEEN

(11) **EP 1 564 455 B1**
(45) Date de publication et mention de la délivrance du brevet: **28.06.2006**
(21) Numéro de dépôt: 05290003.2
(22) Date de dépôt: 04.01.2005
(51) Int. Cl.: F16J 15/32, F01D 11/00

(54) **Dispositif d'étanchéité pour turbine haute-pression de turbomachine**
Dichtungsanordnung für die Hochdruckturbine einer Turbomaschine
Sealing arrangement for the high-pressure turbine of a turbomachine

(30) Priorité: 12.01.2004 FR 0400213
(43) Date de publication de la demande: 17.08.2005
(73) Titulaire: SNECMA, 75015 Paris (FR)
(72) Inventeur: Plona, Daniel Georges, 77870 Vulaines sur Seine (FR); Dussere-Telmon, Guy Franck Paul, 77115 Sivry-Courtry (FR)
(74) Mandataire: Boura, Olivier

(56) Documents cités:
- EP-A- 1 018 613
- US-A- 5 265 412
- US-A- 6 059 526
- US-B1- 6 352 263

## Description

### Arrière-plan de l'invention

La présente invention se rapporte au domaine général des dispositifs d'étanchéité destinés à réduire les sections de passage entre différentes cavités d'une turbomachine, par exemple au niveau de la turbine haute-pression de celle-ci.

Dans les parties chaudes d'une turbomachine, les dispositifs d'étanchéité sont soumis à d'importantes variations de jeu qui résultent de déplacements relatifs généraux au niveau des carters et de distorsions thermiques. En particulier, lorsque l'une des parties à étancher de la turbomachine est sectorisée, comme cela est notamment le cas pour les étages de redresseurs de la turbine haute-pression, la zone de portée du dispositif d'étanchéité est discontinue et les joints d'étanchéité non sectorisés deviennent inefficace.

Il existe différents types de joints assurant l'étanchéité au niveau des parties chaudes d'une turbomachine. Par exemple, on connaît des brevets US 4,781,388, US 5,480,162 et US 6,170,831 des joints dits à brosse qui sont constitués d'une pluralité de poils ou fils, par exemple métalliques, qui sont sertis ou soudés et maintenus dans un logement à l'une de leurs extrémités et qui sont en contact, à leurs extrémités libres, avec la surface de la partie à étancher de la turbomachine. De tels joints à brosse permettent ainsi de s'adapter aux variations de jeu que subissent les dispositifs d'étanchéité. En effet, les poils d'un joint à brosse s'adaptent par construction aux surfaces déformées ou discontinues de la partie à étancher.

Pour les applications statiques dont les déplacements relatifs de la zone à étancher sont réduits, il est connu de réaliser des joints à brosse dont les poils présentent une disposition radiale ou axiale. Un exemple d'application statique est montré dans le document US-A-5265412. Lorsque les déplacements relatifs sont importants, il est en revanche avantageux d'avoir recours à une disposition intermédiaire dans laquelle les poils du joint à brosse sont coudés, comme dans le brevet US 6,059,526, ce qui permet de faire travailler les poils en flexion sur une grande longueur.

Pour les applications statiques, le joint à brosse présente toutefois certains inconvénients. La perméabilité globale des poils qui le constituent est en effet trop élevée pour réaliser une étanchéité vraiment efficace. Ce constat est particulièrement vérifié pour des poils métalliques dont le diamètre doit rester supérieur à 75 micromètres pour conserver des propriétés mécaniques acceptables en fonction des pressions différentielles auxquelles ils sont soumis.

De même, les joints à brosse coudés ne sont pas pleinement satisfaisants. Leur perméabilité globale est en particulier toujours trop élevée pour garantir une parfaite étanchéité de la zone à étancher. De plus, lorsque la surface à étancher présente des discontinuités et/ou des déformations dues notamment à des déplacements radiaux et/ou axiaux relatifs entre les parties de la zone de la turbomachine à étancher, les joints à brosse coudés ne permettent pas d'épouser ces différents accidents géométriques ce qui génère des sections de fuite importantes sous les brosses.

### Objet et résumé de l'invention

La présente invention vise donc à pallier de tels inconvénients en proposant un dispositif d'étanchéité ayant une perméabilité globale relativement faible et qui est capable de s'adapter aux discontinuités et/ou aux déformations de la surface à étancher.

A cet effet, il est prévu un dispositif d'étanchéité entre deux parties statiques d'une turbomachine pour séparer deux enceintes de pressions différentes, comprenant un joint à brosse formé d'une pluralité de poils élastiques d'étanchéité qui sont au moins en partie maintenus dans un logement de l'une des parties statiques, chaque poil ayant une partie principale et une partie secondaire reliées par une partie coudée, la partie principale des poils étant au moins en partie maintenue dans le logement, la partie secondaire des poils ayant une extrémité libre faisant saillie vers l'extérieur du logement de façon à assurer un contact étanche avec une surface à étancher de l'autre partie statique, caractérisé en ce qu'il comporte en outre une coupelle flexible à section courbe qui enveloppe au moins partiellement la partie principale des poils du joint à brosse et qui présente une extrémité libre en appui à la fois contre l'extrémité libre de la partie secondaire des poils du joint à brosse et contre la surface à étancher de sorte que l'extrémité libre de la partie secondaire des poils du joint à brosse est en permanence en contact avec la surface à étancher.

La partie de la coupelle flexible qui est en appui contre l'extrémité libre du joint à brosse permet de maintenir cette extrémité libre des poils en permanence en contact avec la surface à étancher. De plus, la partie de la coupelle qui est en appui contre la surface à étancher augmente l'étanchéité globale du dispositif d'étanchéité. Cette coupelle étant flexible, elle permet par ailleurs de compenser les déplacements radiaux et/ou axiaux relatifs entre les parties statiques de sorte que le dispositif d'étanchéité épouse les différents accidents géométriques de la surface à étancher.

Selon une caractéristique avantageuse de l'invention, la coupelle flexible du dispositif d'étanchéité présente une section courbe ayant sensiblement une forme de oméga (ω).

Selon une autre caractéristique avantageuse de l'invention, l'extrémité libre de la coupelle flexible qui est en appui contre l'extrémité libre de la partie secondaire des poils du joint à brosse et contre la surface à étancher est disposée du côté de l'enceinte ayant la pression la plus faible.

Selon encore une autre caractéristique avantageuse de l'invention, le dispositif d'étanchéité comporte en outre un anneau de retenu de la partie principale des poils du joint à brosse dans le logement de la partie statique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe axiale d'un dispositif d'étanchéité selon l'invention maintenu dans un logement d'une partie statique de turbomachine ;
- la figure 2 illustre, en coupe axiale, une zone de turbomachine munie du dispositif d'étanchéité de la figure 1 ; et
- la figure 3 illustre la déformation du dispositif d'étanchéité de la figure 1 lorsque la surface à étancher présente une discontinuité.

### Description détaillée d'un mode de réalisation

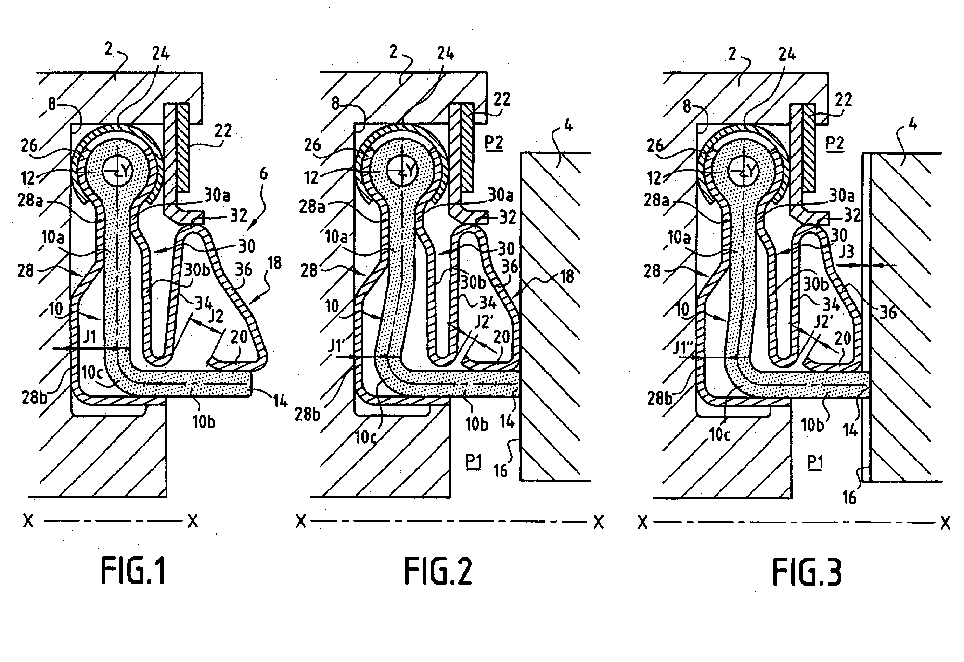

Les figures 1 à 3 représentent, en coupe axiale, un dispositif d'étanchéité selon un mode de réalisation de l'invention. Sur ces figures, les références 2 et 4 désignent respectivement une première et une seconde parties statiques d'une turbomachine d'axe longitudinal X-X. A titre d'exemple, ces deux parties statiques 2, 4 peuvent être des éléments d'une turbine haute-pression de la turbomachine. Par statiques, on entend que ces deux parties sont considérées comme fixes mais qu'elles peuvent néanmoins subir des déplacements relatifs radiaux et/ou axiaux.

Le dispositif d'étanchéité 6 est disposé dans un logement 8 de la première partie statique 2 de la turbomachine. Alternativement, le dispositif d'étanchéité pourrait être positionné dans un logement de la seconde partie statique 4. Ce dispositif 6 permet de réaliser une étanchéité entre deux enceintes P1 et P2 de la turbomachine, la pression de l'enceinte P2 étant par exemple plus faible que celle de l'enceinte P1.

Le dispositif d'étanchéité 6 se compose notamment d'un joint à brosse 10 formé d'une pluralité de poils ou fils. Les poils peuvent être réalisés à partir d'un enroulement de fibres métalliques ou en matériau composite. A l'une de leurs extrémités 12, ces poils sont classiquement sertis autour d'un axe Y, par exemple par soudure. A leur extrémité opposée 14, les poils sont libres et sont en contact étanche avec une surface à étancher 16 de la seconde partie statique 4 de la turbomachine.

De façon plus précise, chaque poil du joint à brosse 10 ainsi formé présente une partie principale 10a et une partie secondaire 10b qui sont reliées par une partie coudée 10c. Les poils de la partie principale 10a sont au moins en partie maintenus dans le logement 8 de la première partie statique 2 de la turbomachine et les poils de la partie secondaire 10b font saillies vers l'extérieur de ce logement de façon à assurer, au niveau de leur extrémité libre 14, un contact étanche avec la surface à étancher 16.

Selon l'invention, le dispositif d'étanchéité 6 comporte en outre une coupelle flexible 18, par exemple métallique, à section courbe qui enveloppe au moins partiellement la partie principale 10a des poils du joint à brosse 10 et qui présente une extrémité libre 20 en appui à la fois contre l'extrémité libre 14 de la partie secondaire 10b des poils du joint à brosse 10 et contre la surface à étancher 16.

L'extrémité libre 20 de la coupelle 18 permet ainsi de maintenir l'extrémité libre 14 de la partie secondaire 10b des poils en permanence en contact avec la surface à étancher 16. De plus, comme l'extrémité libre 20 de la coupelle 18 est en appui contre la surface à étancher 16, elle augmente l'étanchéité globale du dispositif d'étanchéité 6.

De préférence, un anneau de retenue 22 est prévu afin de maintenir la partie principale 10a des poils du joint à brosse 10 dans le logement 8 de la première partie statique 2. Cet anneau de retenue 22 est fixé dans l'une des parois du logement 8 de la première partie statique 2. Il peut également être prévu une bague 24 en C qui entoure au moins en partie l'extrémité sertie 12 des poils du joint à brosse 10 et qui est maintenue dans le logement 8 grâce à l'anneau de retenue 22.

Selon une caractéristique avantageuse de l'invention, la coupelle flexible 18 présente une section droite ayant sensiblement une forme de oméga (ω). Un premier lobe 26 de cet oméga entoure au moins partiellement l'extrémité sertie 12 des poils du joint à brosse 10.

Vers l'intérieur du logement 8, le premier lobe 26 se prolonge par une première branche 28 dont une portion 28a épouse les contours extérieurs de la partie principale 10a des poils du joint à brosse 10. Afin d'autoriser une certaine flexion axiale des poils du joint à brosse 10 lorsque le dispositif d'étanchéité 6 rencontre une discontinuité axiale au niveau de la surface à étancher 16, une autre portion 28b de la première branche 28 n'est pas en contact avec la partie principale 10a des poils du joint à brosse 10 et ménage ainsi un jeu arrière J1 avec cette partie des poils.

Vers l'extérieur du logement 8, le premier lobe 26 se prolonge par une deuxième branche 30 dont une portion 30a épouse également les contours extérieurs de la partie principale 10a des poils du joint à brosse 10. De même, toujours afin d'autoriser une certaine flexion axiale des poils, une autre portion 30b de la deuxième branche 30 n'est pas en contact avec la partie principale 10a des poils du joint à brosse 10.

La coupelle flexible 18 en forme de oméga présente un second lobe 32. Ce second lobe 32 est en appui radial contre l'anneau de retenue 22 fixé au logement 8 de la première partie statique 2. Vers l'intérieur du logement 8, le second lobe 32 se prolonge par une troisième branche 34 qui est reliée à la deuxième branche 30. Vers l'extérieur du logement 8, le second lobe 32 se prolonge par une quatrième branche 36 dont l'extrémité libre 20 est en appui à la fois contre l'extrémité libre 14 de la partie secondaire 10b des poils du joint à brosse 10 et contre la surface à étancher 16. Un jeu avant J2 est par ailleurs ménagé entre cette extrémité libre 20 et la troisième branche 34.

Selon une autre caractéristique avantageuse, cette extrémité libre 20 de la coupelle flexible 18 (qui est aussi l'extrémité libre de la quatrième branche 36) est disposée du côté de l'enceinte P2 ayant la pression la plus faible.

Ainsi, la coupelle flexible 18, et plus particulièrement son extrémité libre 20, permet d'empêcher que l'extrémité libre 14 de la partie secondaire 10b des poils du joint à brosse 10 se courbe radialement vers l'enceinte P2 sous l'effet de la différence de pressions entre les enceintes P1 et P2. En effet, une telle flexion radiale de l'extrémité libre des poils du joint à brosse entraînerait un « décollement » des poils du joint à brosse qui ne seraient alors plus en contact avec la surface à étancher, augmentant ainsi la perméabilité globale du dispositif d'étanchéité.

Selon encore une autre caractéristique avantageuse de l'invention, la partie coudée 10c des poils du joint à brosse 10 présente un angle droit de sorte que la partie secondaire 10b des poils du joint à brosse s'étend de façon sensiblement perpendiculaire par rapport à leur partie principale 10a.

Toujours avantageusement, le joint à brosse 10 est disposé de sorte que la partie principale 10a de ses poils s'étend de façon sensiblement perpendiculaire par rapport à l'axe longitudinal X-X de la turbomachine et que la partie secondaire 10b de ses poils s'étend de façon sensiblement parallèle à cet même axe longitudinal X-X.

On décrira brièvement le mode de fonctionnement du dispositif d'étanchéité selon l'invention qui découle de manière évidente de ce qui précède.

La figure 1 représente le dispositif d'étanchéité 6 lorsque celui-ci est à l'état libre, c'est à dire lorsque la seconde partie statique de la turbomachine n'est pas mise en place. Dans cette configuration, l'extrémité libre 20 de la coupelle flexible 18 est bien en appui contre l'extrémité libre 14 de la partie secondaire 10b des poils du joint à brosse 10. L'extrémité libre 20 de la coupelle 18 est par ailleurs axialement légèrement protubérante par rapport à l'extrémité libre 14 de la partie secondaire 10b des poils.

Lorsque la seconde partie statique 4 de la turbomachine est serrée axialement contre la première partie statique 2 (configuration d'utilisation normale - figure 2), la coupelle flexible 18, et plus particulièrement la quatrième branche 36, est déformée axialement de sorte que le jeu avant J2' se réduit par rapport à la configuration du dispositif d'étanchéité à l'état libre (J2' < J2).

De même, la partie principale 10a des poils du joint à brosse 10 se déforme axialement vers l'intérieur du logement 8, entraînant une diminution du jeu arrière J1' (J1' < J1). On notera qu'ainsi la coupelle flexible 18 est bien en appui contre la surface à étancher 16 au niveau de son extrémité libre 20, ce qui contribue à augmenter l'étanchéité globale du dispositif 6.

Par ailleurs, la coupelle 18 étant en appui contre la surface à étancher 16, il est ainsi possible de maintenir le dispositif d'étanchéité 6 en contact avec la surface à étancher 16, notamment lorsque celle-ci présente des discontinuités et/ou des déformations. Cette configuration est illustrée par la figure 3.

Sur cette figure, le dispositif d'étanchéité 6 rencontre une discontinuité axiale au niveau de la surface à étancher 16 qui est représentée par le jeu J3. Une telle discontinuité J3 peut résulter d'un déplacement axial relatif entre les première et seconde parties statiques 2, 4 de la turbomachine. Elle peut également être engendrée par des déformations thermiques importantes au niveau de l'une de ces parties statiques 2, 4.

Dans cette situation, l'extrémité libre 12 des poils du joint à brosse 10 reste bien en contact étanche avec la surface à étancher 16. Ceci est rendu possible grâce à la flexibilité des poils du joint à brosse qui, au niveau de leur partie principale 10a, se déforment légèrement vers l'extérieur du logement 8 par rapport à leur configuration d'utilisation normale (figure 2). Ainsi, le jeu arrière J1" augmente à nouveau par rapport à la configuration d'utilisation normale (J1" > J1').

La flexibilité de la coupelle 18 permet au dispositif d'étanchéité 6 de reprendre sa position d'utilisation normale (figure 2) lorsque la discontinuité axiale de la surface à étancher 12 disparaît. En effet, une fois la discontinuité axiale disparue, les poils de la partie principale 10a du joint à brosse 10 reprennent leur forme initiale (figure 2) par effet élastique.

De la sorte, le dispositif d'étanchéité 6 selon l'invention épouse parfaitement les différentes déformations et/ou discontinuités qu'il peut rencontrer au niveau de la surface à étancher 16. L'extrémité libre 14 des poils du joint à brosse 10 est constamment en contact avec la surface à étancher afin d'assurer une parfaite étanchéité entre les deux parties statiques de la turbomachine.

## Revendications

1. Dispositif d'étanchéité entre deux parties statiques (2, 4) d'une turbomachine pour séparer deux enceintes (P1, P2) de pressions différentes, comprenant un joint à brosse (10) formé d'une pluralité de poils élastiques d'étanchéité qui sont au moins en partie maintenus dans un logement (8) de l'une desdites parties statiques (2), chaque poil ayant une partie principale (10a) et une partie secondaire (10b) reliées par une partie coudée (10c), ladite partie principale (10a) des poils étant au moins en partie maintenue dans ledit logement (8), ladite partie secondaire (10b) des poils ayant une extrémité libre (14) faisant saillie vers l'extérieur dudit logement (8) de façon à assurer un contact étanche avec une surface à étancher (16) de l'autre partie statique (4), **caractérisé en ce qu'**il comporte en outre une coupelle flexible (18) à section courbe qui enveloppe au moins partiellement la partie principale (10a) des poils du joint à brosse (10) et qui présente une extrémité libre (20) en appui à la fois contre l'extrémité libre de la partie secondaire (10b) des poils du joint à brosse (10) et contre ladite surface à étancher (16) de sorte que ladite extrémité libre (14) de la partie secondaire (10b) des poils du joint à brosse (10) est en permanence en contact avec ladite surface à étancher (16).

2. Dispositif selon la revendication 1, **caractérisé en ce que** la coupelle flexible (18) présente une section courbe ayant sensiblement une forme de oméga.

3. Dispositif selon l'une des revendications 1 et 2, **caractérisé en ce que** l'extrémité libre (20) de la coupelle flexible (18) qui est en appui contre l'extrémité libre (14) de la partie secondaire (10b) des poils du joint à brosse (10) et contre la surface à étancher (16) est disposée du côté de l'enceinte (P2) ayant la pression la plus faible.

4. Dispositif selon l'une quelconque des revendications 1 à 3, **caractérisé en ce qu'**il comporte en outre un anneau de retenue (22) de la partie principale (10a) des poils du joint à brosse (10) dans le logement (8) de la partie statique (2).

5. Dispositif selon l'une quelconque des revendications 1 à 4, **caractérisé en ce que** la partie coudée (10c) des poils du joint à brosse (10) présente un angle droit de sorte que la partie secondaire (10b) des poils du joint à brosse s'étend de façon sensiblement perpendiculaire par rapport à la partie principale (10a) des poils du joint à brosse.

6. Dispositif selon l'une quelconque des revendications 1 à 5, **caractérisé en ce que** le joint à brosse (10) est disposé de sorte que la partie principale (10a) des poils s'étend de façon sensiblement perpendiculaire par rapport à un axe longitudinal (X-X) de la turbomachine et que la partie secondaire (10b) des poils s'étend de façon sensiblement parallèle audit axe longitudinal (X-X) de la turbomachine.

## Claims

1. A sealing device for sealing between two static portions (2, 4) of a turbomachine in order to separate two spaces (P1, P2) of different pressures, said sealing device comprising a brush gasket (10) formed by a plurality of resilient sealing bristles which are, at least in part, held in a housing (8) in one of said static portions (2), each bristle having a main portion (10a) and a secondary portion (10b) interconnected by a bent portion (10c), said main portions (10a) of the bristles being, at least in part, held in said housing (8), said secondary portions (10b) of the bristles having respective free ends (14) that project towards the outside of said housing (8) in order to ensure leaktight contact with a surface that is to be sealed (16) of the other static portion (4), said sealing device being **characterized in that** it further comprises a flexible washer (18) with a bent section which covers, at least in part, the main portions (10a) of the bristles of the brush gasket (10) and which has a free end (20) bearing both against the free ends of the secondary portions (10b) of the bristles of the brush gasket (10), and against said surface that is to be sealed (16) so that said free ends (14) of the secondary portions (10b) of the bristles of the brush gasket (10) is permanently in contact with said surface that is to be sealed (16).

2. A device according to claim 1, **characterized in that** the flexible washer (18) has a bent section of substantially omega shape.

3. A device according to claim 1 or claim 2, **characterized in that** the free end (20) of the flexible washer (18) which bears against the free ends (14) of the secondary portions (10b) of the bristles of the brush gasket (10) and against the surface that is to be sealed (16) is disposed on the side of the space (P2) that has the lower pressure.

4. A device according to any one of claims 1 to 3, **characterized in that** it also includes a retaining ring (22) for retaining the main portions (10a) of the bristles of the brush gasket (10) that are in the housing (8) of the static portion (2).

5. A device according to any one of claims 1 to 4, **characterized in that** the bent portions (10c) of the bristles of the brush gasket (10) are right angled so that the secondary portions (10b) of the bristles of the brush gasket extend substantially perpendicularly to the main portions (10a) of the bristles of the brush gasket.

6. A device according to any one of claims 1 to 5, **characterized in that** the brush gasket (10) is disposed so that the main portions (10a) of the bristles extend substantially perpendicularly to a longitudinal axis (X-X) of the turbomachine, and so that the secondary portions (10b) of the bristles extend substantially parallel to said longitudinal axis (X-X) of the turbomachine.

## Patentansprüche

1. Vorrichtung zur Abdichtung zwischen zwei statischen Teilen (2, 4) einer Turbomaschine, um zwei Innenräume (P1, P2) unterschiedlicher Drücke zu trennen, umfassend eine Bürstendichtung (10), gebündelt aus einer Vielzahl elastischer Dichtungsborsten, die wenigstens teilweise in einem Sitz (8) von einem der statischen Teile (2) gehalten sind, wobei jede Borste einen Hauptteil (10a) und einen Nebenteil (10b) hat, die durch einen Bogenteil (10c) verbunden sind, wobei der Hauptteil (10a) der Borsten wenigstens teilweise in dem Sitz (8) gehalten wird, wobei der Nebenteil (10b) der Borsten ein freies Ende (14) hat, das zum Äußeren des Sitzes (8) derart hervorsteht, daß ein dichter Kontakt mit einer Oberfläche (16), die von den anderen statischen Teilen (4) abzudichten ist, sichergestellt ist, **dadurch gekennzeichnet, daß** sie weiterhin eine flexible Schale (18) mit gekrümmten Querschnitt aufweist, die wenigstens teilweise den Hauptteil (10a) der Borsten der Bürstendichtung (10) umhüllt, und der ein freies Ende (20) zur Abstützung gleichzeitig gegen das freie Ende des Nebenteils (10b) der Borsten der Bürstendichtung (10) und gegen die abzudichtende Oberfläche (16) derart aufweist, daß das freie Ende (14) des Nebenteils (10b) der Borsten der Bürstendichtung (10) permanent in Kontakt mit der abzudichtenden Oberfläche (16) ist.

2. Vorrichtung nach einem der Ansprüche 1 und 2, **dadurch gekennzeichnet, daß** die flexible Schale (18) einen gekrümmten Querschnitt mit im wesentlichen einer Omega-Form aufweist.

3. Vorrichtung nach einem der Ansprüche 1 und 2, **dadurch gekennzeichnet, daß** das freie Ende (20) der flexiblen Schale (18), die gegen das freie Ende (14) des Nebenteils (10b) der Borsten der Bürstendichtung (10) und gegen die abzudichtende Oberfläche (16) abgestützt ist, auf der Seite des Innenraumes (P 2) mit dem geringsten Druck angeordnet ist und

4. Vorrichtung nach einem der Ansprüche 1 bis 3 **dadurch gekennzeichnet, daß** sie außerdem einen Rückhalt (22) des Hauptteils (10a) der Borsten der Bürstendichtung (10) in dem Sitz (8) des statischen Teils (2) umfaßt.

5. Vorrichtung nach einem der Ansprüche 1 bis 4 **dadurch gekennzeichnet, daß** der gekrümmte Teil (7c) der Borsten der Bürstendichtung (10) einen rechten Winkel derart aufweist, daß der Nebenteil (10b) der Borsten der Bürstendichtung sich im wesentlichen senkrecht im Verhältnis zum Hauptteil (10a) der Borsten der Bürstendichtung erstreckt.

6. Vorrichtung nach einem der Ansprüche 1 bis 5 **dadurch gekennzeichnet, daß** die Bürstendichtung (10) derart angeordnet ist, daß der Hauptteil (10a) der Borsten sich im wesentlichen senkrecht im Verhältnis zu einer Längsachse (X-X) der Turbomaschine erstreckt und der Nebenteil (10b) der Borsten sich im wesentlichen parallel zur Längsachse (X-X) der Turbomaschine erstreckt.
